(19) Europäisches Patentamt
European Patent Office
Office européen des brevets

(11) **EP 3 068 074 A1**

(12) **EUROPEAN PATENT APPLICATION**

(43) Date of publication:
**14.09.2016  Bulletin 2016/37**

(51) Int Cl.:
**H04L 12/24** *(2006.01)*

(21) Application number: **15305376.4**

(22) Date of filing: **12.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
• **Thangaraj, Senthil Nathan
  600096 Chennai (IN)**
• **Balraj, Murugan
  600096 Chennai (IN)**
• **Joshi, Shrinivas
  600096 Chennai (IN)**

(74) Representative: **Mills, Julia et al
Script IP Limited
18 Bridge Street
Frome Somerset BA11 1BB (GB)**

(54)   **Indicating a monitoring mode for monitoring a quality of communications between nodes**

(57)    This application relates to a method of indicating one of a plurality of monitoring modes for monitoring communication between nodes in a network and the network nodes. The method comprises: transmitting an indicator identifying one of the plurality of monitoring modes from an initiating node towards a receiving node; and transmitting a monitoring request from the initiating node towards the receiving node, the monitoring request triggering monitoring of communication between the initiating node and the receiving node.

FIG. 4

**Description**

FIELD OF THE INVENTION

The field of the invention relates to networks and in particular, to monitoring a quality of communications transmitted between nodes within such networks.

BACKGROUND

When devices communicate with each other across a network, different communication protocols are used. It may be important to be able to assess the quality of communications between equipment or nodes within the network such as between routers or switches for passing data traffic. Monitoring data traffic between two such nodes requires the monitoring to be consistent such that the same monitoring process is performed at each node. This has conventionally required an operator to manually configure the two nodes to ensure consistency in their monitoring process. Not only is this an overhead for an operator requiring him to configure both nodes, but it also limits such tests to nodes that the operator has access to. This makes it difficult to monitor communications with remote nodes owned by other operators, as configuration of these nodes requires access to the node and the cooperation of the node operator.

It would be desirable to reduce the operator overhead associated with controlling the monitoring mode for monitoring communications between two nodes within a network.

SUMMARY

A first aspect of the present invention provides a method of indicating one of a plurality of monitoring modes for monitoring communication between nodes in a network, said method comprising: transmitting an indicator identifying one of said plurality of monitoring modes from an initiating node towards a receiving node; and transmitting a monitoring request from said initiating node towards said receiving node, said monitoring request triggering monitoring of communication between said initiating node and said receiving node.

The present invention recognises that although it is known to monitor communications between nodes in a network and in particular to monitor the quality of such communication within a particular protocol, the mode of such monitoring, is conventionally configured individually at both the initiating node and receiving node providing a high operator overhead. This problem has been addressed by the inventors of the present invention by transmitting an indication of monitoring mode as well as a request for such monitoring. In this way the initiating node can instruct and in effect remotely configure the receiving node to monitor in the required mode, enabling consistency of monitoring without the need for the operator to manually configure and access both nodes.

The monitoring mode is the monitoring process that is performed and may vary according to the class of traffic that is monitored, the level of aggregation of the data that is monitored and/or the links over which the data is to monitored. Thus, in one mode data transmitted in one direction between two nodes maybe monitored while in another, it may be the data in both directions that is monitored. Alternatively and/or additionally in one mode data of a specific type or frame size may be monitored while in another it maybe the sum of data of multiple types or multiple frame sizes that is monitored.

The communication between nodes is communication between different devices in the network, for example, nodes may be switches or routers, or in VLAN (virtual local area network) they may be "endpoints" that is nodes at the edge of a VLAN, providing communication between different VLANs. For example, where monitoring is of an Ethernet network using a connectivity fault management (CFM) protocol the nodes may be maintenance endpoints (MEP) that is points at the edge of a maintenance domain.

Although the indicator may be transmitted between the initiating node and the receiving node in a number of different ways, in some embodiments said step of transmitting said indicator and transmitting said monitoring request comprises a single step, said indicator being transmitted in a predetermined field within said monitoring request.

As the monitoring request is transmitted from the initiating node to the receiving node, it may be advantageous to include the indicator of the monitoring mode within this request. In such a way, no additional signal needs to be transmitted, the information is simply provided by a field within the request. In this regard, it may be that in some protocols there is an unused field in the monitoring request and in such a case, the additional indicator information can be transmitted in an efficient and convenient manner using this field.

In other embodiments, said step of transmitting said indicator comprises transmitting said indicator as a control signal prior to transmitting said monitoring request.

Alternatively, the indicator may be transmitted as a control signal prior to transmitting the monitoring request. In this way, the receiving node may be configured to monitor in a certain monitoring mode and receipt of the monitoring request will trigger monitoring in that mode. In a way, this is similar to the prior art process where the operator manually configures the receiving node. However, rather than the operator needing to manually configure and have access to the receiving node, a control signal is simply transmitted from the initiating node and the configuration is performed in response to receipt of this control signal. In some embodiments, following monitoring a further control signal may be transmitted to restore the receiving node to its former state such that it is no longer configured to monitor in the monitoring mode specified in the original control signal.

In some embodiments, the method comprises transmitting a further monitoring request towards said receiving node, said further monitoring request comprising a further indicator indicating a further one of said plurality of monitoring modes.

Where the indicator indicating a monitoring mode is within the monitoring request, this makes it straightforward to trigger monitoring in more than one mode at any one time, as each monitoring request will indicate to the receiving node the mode of monitoring that it wishes it to perform and provided the node is able to monitor and store data for each mode separately then it may monitor in more than one mode at any one time. This is an advantage over the conventional techniques where configuration of a node meant that only one monitoring mode at any one time could be performed. Providing the indicator of monitoring mode along with the request means that multiple requests can be transmitted and monitoring according to these requests can be performed at any one time in different modes with a receiving node monitoring the appropriate packets and/or links depending on the mode indicated in the request.

In some embodiments, the method comprises receiving a response to said monitoring request from said receiving node, said response providing an indication of a number of data packets relevant to said indicated monitoring mode received from said initiating node.

The receiving node may respond to the monitoring request by indicating the number of data packets it has received from the initiating node. In this regard, depending on the mode it may be data packets of a particular size or type or it may be a total number of data packets that are counted. Such a response allows the initiating node which is aware of how many data packets it transmitted to determine how many packets have been lost during communication.

In some embodiments, a plurality of different types of data packets are transmitted between said nodes, one of said plurality of monitoring modes corresponds to monitoring one type of data packet and a further one of said monitoring modes corresponds to monitoring multiple types of data packets transmitted between said nodes.

Where a number of different types of data packets are transmitted between the nodes, these may be data packets of particular sizes or they may be data packets of particular priority, then the modes may comprise monitoring one particular type or monitoring multiple or all types.

Where the indicator indicating the mode is transmitted within the request and where the receiving node has sufficient counters, then multiple monitoring modes may be performed at the same time such that a particular type of data packet may be counted by one set of counters and multiple or all types of data packets may at the same time be counted by a further set of counters. In this regard, the multiple sets of counters may be present on both the initiating and the receiving node and the data packets transmitted and received at each node may be counted and this information may be transmitted between the nodes and used to determine the quality of the communication link.

In some embodiments, said monitoring request comprises a request to determine a number of data packets that are not successfully received during communication between said initiating node and said receiving node, said monitoring mode indicating said data packets to be monitored, such that monitoring according to said monitoring mode comprises counting said data packets indicated by said monitoring mode that are transmitted towards said receiving node and determining from a response received from said receiving node a number of said data packets that are received at said receiving node.

In some embodiments, at least one of said monitoring modes comprises monitoring data packet loss transmitted in one direction between said initiating node and said receiving node, and a further one of said monitoring modes comprises monitoring data packet loss transmitted in both directions between said receiving node and said initiating node.

As noted above, different monitoring modes may relate to the level at which data is aggregated that is whether a single type of data packet is monitored or whether multiple types are combined together in the monitoring. Alternatively and/or additionally it may relate to the links over which the data is transmitted such that data transmitted between the initiating node and the receiving node may be monitored or that transmitted between the receiving node and the initiating node may be monitored and/or data transmitted in both directions maybe monitored.

A second aspect of the present invention provides a node within a network, said node being operable to communicate with at least one further node via said network, said node comprising: control logic operable to initiate monitoring of communication between said node and a receiving node by generating and transmitting a monitoring request towards said receiving node; said control logic being further operable to generate an indicator identifying one of a plurality of monitoring modes for said monitoring of said communication and to transmit said indicator towards said receiving node.

In some embodiments, said node further comprises at least one counter said at least one counter being operable following initiating of said monitoring to count data packets indicated by said monitoring mode transmitted towards said receiving node.

The node may comprise a counter as the monitoring may require counting of particular data packets that are transmitted and/or are received at a node.

In some embodiments, said node comprises at least one further counter, said at least one further counter being operable to count data packets indicated by a further mode of monitoring following initiating of monitoring of said further monitoring mode by said control logic.

Where the node has more than one counter, then it may count different types of packets at the same time enabling more than one mode of monitoring to be performed at any one time.

A third aspect of the present invention provides a method of determining one of a plurality of monitoring modes to perform when monitoring communication between two nodes in a network, said method comprising: receiving at a receiving node a request for monitoring communication between said receiving node and an initiating node transmitting said request; receiving at said receiving node an indicator indicating a mode of said monitoring; transmitting a response to said request, said response being dependent upon said mode indicator.

In some embodiments the indicator indicating said mode of said monitoring is received within said request while in other embodiments said indicator is received as a control signal prior to said request.

In some embodiments, said method further comprises receiving a further monitoring request from said initiating node, said further monitoring request comprising a further indicator indicating a further one of said plurality of monitoring modes.

In some embodiments, the method comprises transmitting a response to said monitoring request towards said initiating node, said response providing an indication of a number of data packets relevant to said indicated monitoring mode received from said initiating node.

A fourth aspect of the present invention provides a node within a network, said node being operable to communicate with at least one further node via said network, said node comprising: receiving logic operable to receive from an initiating node a request for monitoring communication between said node and said initiating node, and an indicator indicating a mode of said monitoring; and determining logic operable to determine a mode of monitoring to perform in dependence upon said mode indicator.

In some embodiments, said node further comprises at least one counter said at least one counter being operable following initiating of said monitoring to count data packets indicated by said monitoring mode indicator received at said node from said initiating node.

The node may comprise one or more counters as the monitoring may require counting of particular data packets that are transmitted and/or are received at the node.

In some embodiments, said node comprises at least one further counter, said at least one further counter being operable to count data packets indicated by a further mode of monitoring following receipt of a further monitoring request from said initiating node, said further monitoring request indicating a further mode of monitoring.

A fifth aspect of the present invention provides a computer program which when executed by a program is operable to control said computer to perform a method according to a first or a third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

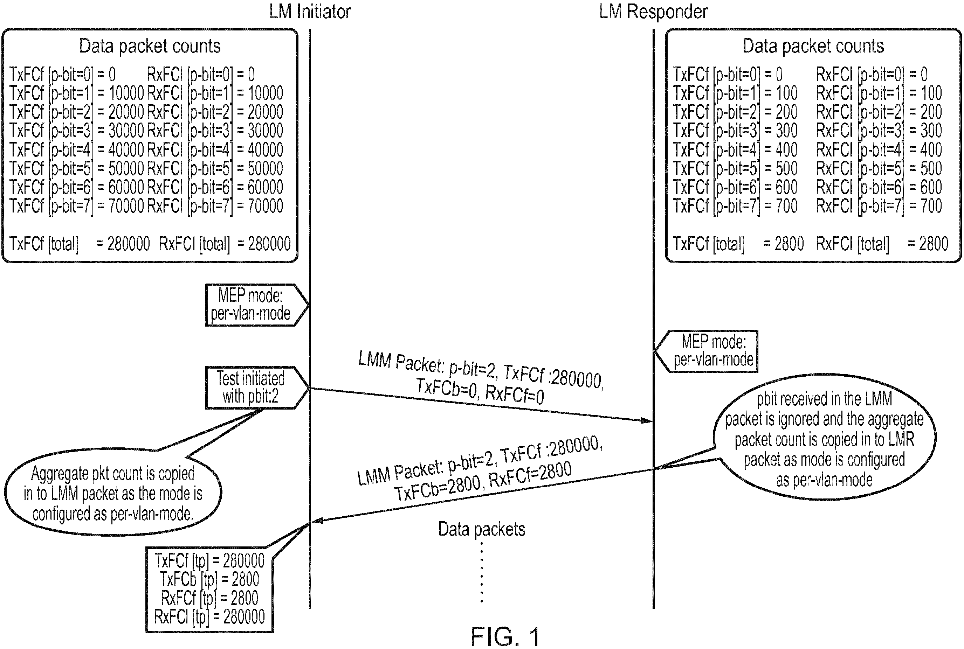

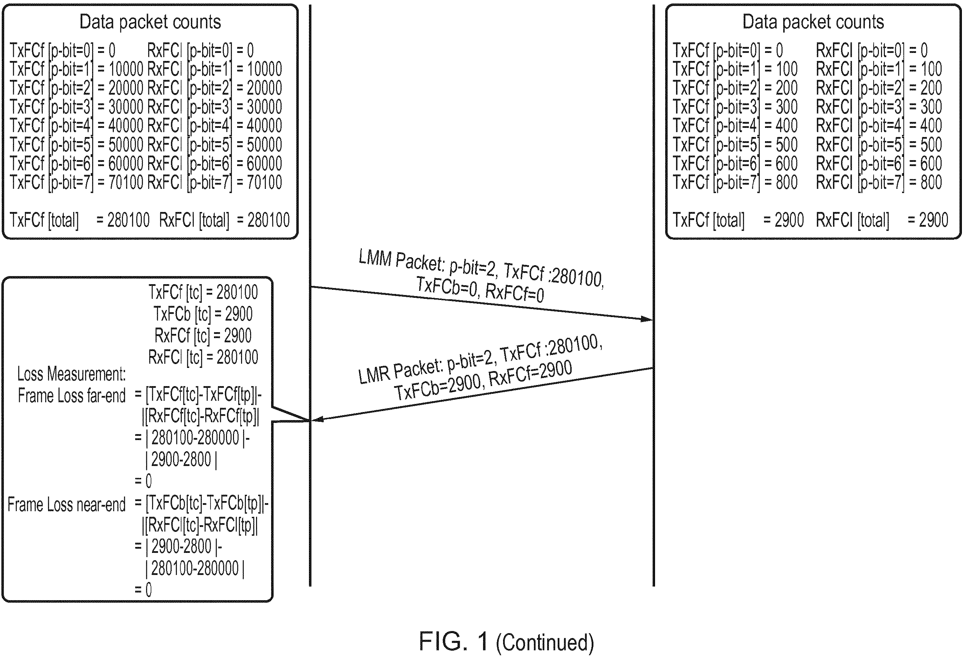

Figure 1 illustrates a flow diagram showing a method according to an embodiment;

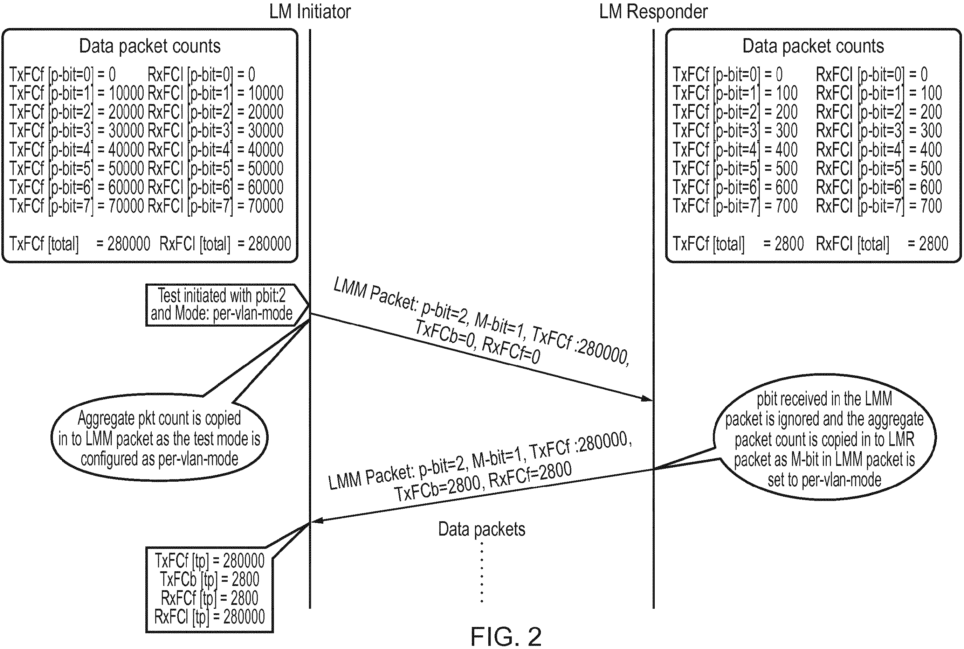

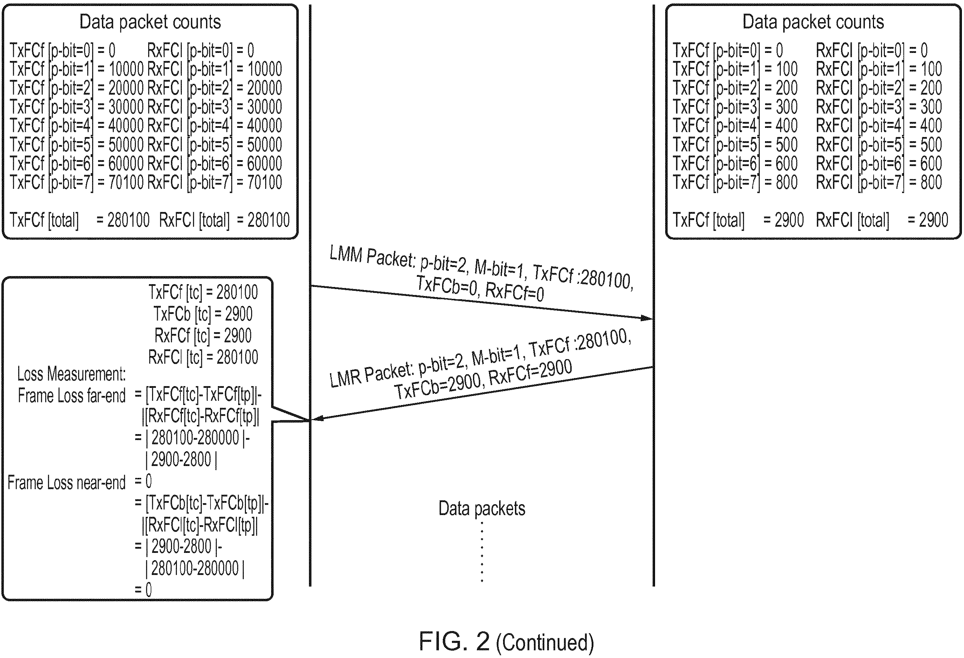

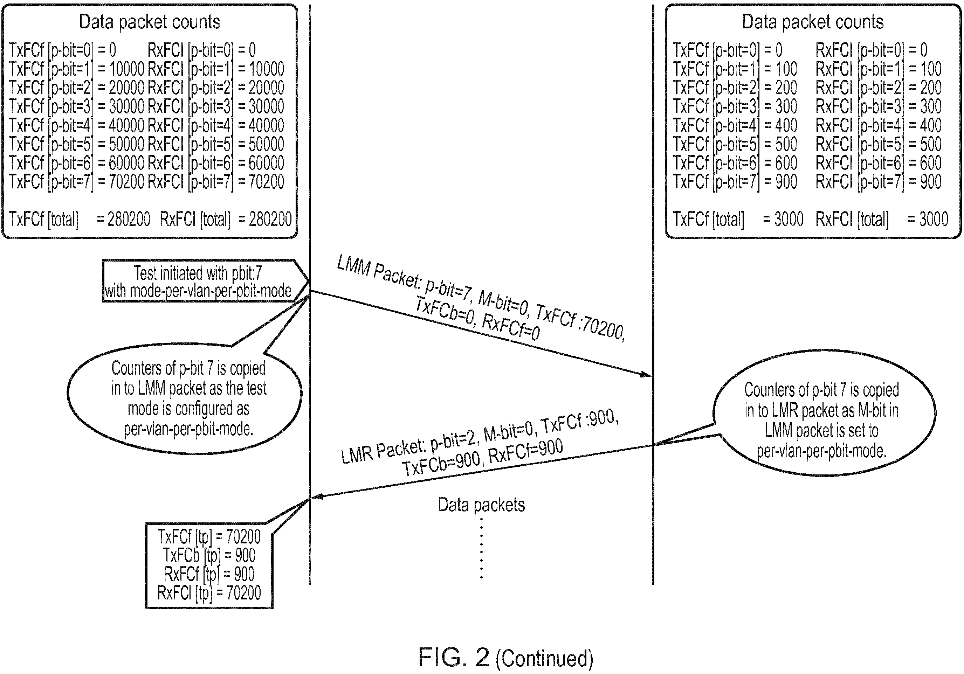

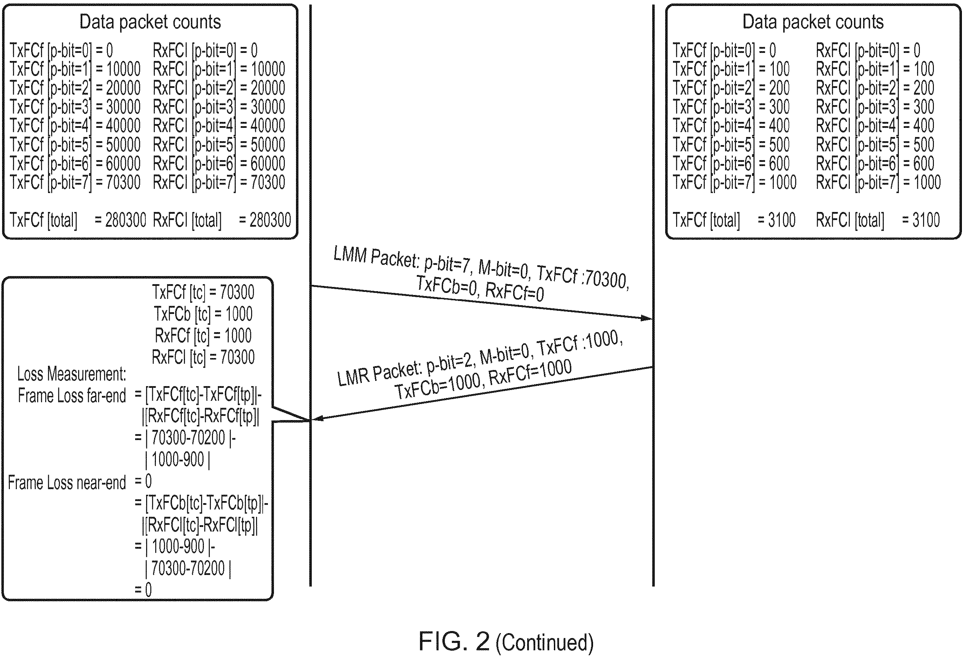

Figure 2 illustrates a flow diagram showing a method monitoring in two modes at a same time according to an embodiment;
Figure 3 illustrates an Ethernet network on which monitoring according to an embodiment is performed; and
Figure 4 illustrates a node according to an embodiment.

## DESCRIPTION OF THE EMBODIMENTS

Before discussing the embodiments in any more detail, first an overview will be provided.

In real time networks when nodes communicate with each other using a particular communication protocol, operator intervention is conventionally required to ensure that the node and peer node are configured in the same mode per protocol. This is an overhead for the operator who manages many nodes interconnected in the network.

Examples of such modes include:

- Counter stats monitoring modes: All frames size / Specific frame size When the operator is triggering monitoring from Node X and wishes to view the performance counters on a link present in Node Y for a specific frame size, the operator has to ensure that Node Yis configured to respond only for this specific frame size (i.e. a mode needs to be configured on both the sides to ensure that they both operate in the same mode).
- Loss monitoring modes: Vlan level or per vlan per COS (class of service) level. When the operator is triggering from Node X to view loss between Node X and Node Y at a vlan level, the operator has to ensure that Node X request is given at the vlan level and Node Yis configured to respond at the vlan level.

In the above cases it is clear that it requires operator overhead in maintaining the mode consistency of Node X and Node Y.

Embodiments seek to reduce the operator's overhead in ensuring consistency of the monitoring mode across nodes by transmitting an indicator of monitoring mode from the initiating node to the receiving node, and in some embodiments this is achieved by introducing a mode field in the Protocol PDU (packet data unit). There are two ways to achieve this:

In-band signalling mode : Carry the mode along with the requesting packet from one node to another node;
Out-of-band signalling mode: Carry a separate packet to set the mode, send the request packet and retrieve the information via the response, send a separate packet to restore the mode.

One such Protocol instance where the in-band signalling mode can play an important role is LM Loss Measurement in CFM (connectivity fault management).

IEEE802.1ag/ITU-1731 describes protocols/procedures/managed objects for Operation, Adminstration and Management (OAM) of Ethernet networks using Connectivity Fault Management (CFM) Protocol. The function of the CFM protocol includes Path Discovery, Fault Isolation/Detection, Fault verification, Fault notification and Fault recovery.

CFM partitions a network into hierarchical adminstrative domains called Maintenance Domains (MD). A Maintenance Domain (MD) is assigned a unique level number ranging from 0 to 7 upon mutual agreement by the different network operators (service provider, core network, access network etc.). Every Maintenance Domain has its own number of Maintenance Associations (MA) dedicated to monitor a specific service or a VLAN in the network. Maintenance End Point (MEP) is a functional entity that initiates and terminates CFM messages and is implemented at the edge of the Domain.

ITU Y1731 defines a mechanism to measure data frame loss between a pair of MEPs per VLAN per prority class (p-bit) using LMM/LMR (loss measurement message/ loss measurement reply) frames PDUs.

LM Initiator :

When a MEP (residing on a particular maintenance level and a vlan) is configured with a LM Initiator test on a p-bit, it periodically transmits the LMM packet with the configured p-bit and with the counter TxFCf to the targetted MEP TxFCf: No of inprofile data frames transmitted by the Initiator MEP on that VLAN service on that p-bit.
And it also maintains a local counter RxFCl: No of inprofile data frame received by the Initiator MEP on that VLAN service on that p-bit.

LM Responder :

Whenever a LMM frame is received by a MEP, an LMR is generated and transmitted to the requesting MEP with the following counters.
TxFCf: Value of the TxFCf copied from the LMM frame.

RxFCf: No of the inprofile data frames received by the responder MEP on that VLAN service for the corresponding p-bit received from the LMM frame.

TxFCb : No of the inprofile date frames transmitted by the responder MEP on the VLAN service for the corresponding p-bit received from the LMM frame.

**Loss Calculation :** Upon receiving LMR frame, the LM Initiator calculates the frame loss as follows:

- Received LMR frame's TxFCf, RxFCf and TxFCb value and local counter RxFCl value at the the time this LMR frame was received. These values are represented as TxFCf[tc], RxFCf[tc], TxFCb[tc] and RxFCl [tc], where tc is the reception time of the current reply frame.
- Previous LMR frame's TxFCf, RxFCf and TxFCb value and local counter RxFCl value at the time the previous LMR frame was received. These values are represented as TxFCf[tp], RxFCf[tp], TxFCb[tp] and RxFCl [tp], where tp is the reception time of the previous reply frame.

$$\text{Loss far-end} = |\,\text{TxFCf[tc] - TxFCf[tp]}\,| - |\,\text{RxFCf[tc] - RxFCf[tp]}\,|$$

$$\text{Loss near-end} = |\,\text{TxFCb[tc] - TxFCb[tp]}\,| - |\,\text{RxFCl[tc] - RxFCl[tp]}\,|$$

The above mechanism which is defined in the standard, measures the loss between the two end points (MEP) per vlan per priority class but unfortunately it does not provide a method/mechanism to find the loss one stage higher which is at vlan level (including all the priority classes). Thus, conventionally in order to measure the loss at vlan level operators have introduced a proprietary method by enforcing the mode (per-vlan-mode) of the end points to count and carry the agreegated counter only (sum of all p-bit counter) in the LM packet.

Unfortunately this adds overhead to the operator in configuring the mode (per-vlan-mode or per-vlan-per-pbit mode) on both the ends.

An existing solution for such loss measurement protocols includes one where an operator can configure eight different tests each per p-bit (0-7) and sum the losses of these different tests to derive the overall loss at the vlan level. However, this adds additional LMM packets (one per each test @ configured pkt rate) load in the network from every MEP (which runs these tests). For example: If there are 10 MEPs who are interested in vlan level loss measurement at the rate of 1 sec then there will be a load of 80 pkts/ secs in the network. This approach also adds the overhead to the management station to sum these losses.

This is addressed by embodiments by providing montioring mode information carried wihtin the PDU (packet data unit).

For LM this can be done by reserving a Mode bit in the flag field of LMM packet to represent the mode of LM Initiator : per-vlan (or) per-vlan-per-bit.

```
---- ---- ---- ---- --- ---- ---- ---- ---
```

Flags field : | 8 | 7 | 6 | 5 | 4 | 3 | 2 | 1 | 0 |

```
---- ---- ---- ---- --- ---- ---- ---- ---
```

| | | | | | | | | | | | | | |M| |

```
---- ---- ---- ---- --- ---- ---- ---- ---
```

M : 1 means per-vlan-mode

M : 0 means per-vlan-per-pbit-mode

Why Bit 0 is not used : Refer G.8013/Y1731 Amendment 1-05/21. This is used to differentiate proactive/on-demand loss measurement test.

When the LM responder receives this LMM packet based on this mode it can decide which counter needs to be filled as set out below

per-vlan-per-pbit-mode :

TxFCf: Value of the TxFCf copied from the LMM frame.
RxFCf: No of the inprofile data frames received by the responder MEP on that VLAN service for the corresponding p-bit received from the LMM frame.
TxFCb : No of the inprofile date frames transmitted by the reponder MEP on that VLAN service for the corresponding p-bit received from the LMM frame. per-vlan-mode :

TxFCf: Value of the TxFCf copied from the LMM frame.
RxFCf: No of the inprofile data frames received by the responder MEP on that VLAN service (includes all p-bit).
TxFCb : No of the inprofile date frames transmitted by the responder MEP on that VLAN service (includes all p-bit).
in this case the p-bit carried in the LMM frame will be ignored.

Assumption of this approach

- LM Responder/LM Initiator maintains both per-vlan-per-pbit and per-vlan counters.
- LM Initiator is capable of intiating the LM test in per-vlan and/or per-vlan-per-bit mode

In the same way the Flag in CCM packet can also be extended to support Dual ended loss measurement (that's measuring the loss on both sides with the same mode).

In further embodiments there may be further counters provided such that there are two sets of counters in each node and in such a case loss measurements in both modes can be carried out at the same time, with LMMs being sent indicating a test in per vlan per priority and being sent indicating a test in per vlan.

Figure -1 : Ilustration of a method according to an embodiment

1) per-vlan-mode is configured in both LM Initiator/Responder MEPs
2) LMM/LMR generated with the aggregated counters
3) Loss measurement at vlan level made with the aggregated counters

Figure -2 : Ilustration of loss calculation by carrying the mode bit (M-Bit) in the LMM/LMR packet
Test-A)

1) A test is configured in per-vlan-mode in LM Initiator
2) LMM packet is sent with aggregated counters and with M-Bit set 2) LMR packet is generated with aggregated counters and with M-Bit set
3) Loss measurement at vlan level made with the aggregated counters Test-B)

1) A test is configured in per-vlan-per-pbit-mode in LM Initiator
2) LMM packet is sent with the counters of the configured p-bit and with M-Bit reset
2) LMR packet is generated with the counters of the configured p-bit and with M-Bit reset
3) Loss measurement at per-vlan per-pbit is made

Figure-2 shows that the operator does not have the overhead in configuring mode across the nodes and can run tests on the both the modes (per-vlan-mode and per-vlan-per-bit-mode) at the same time.

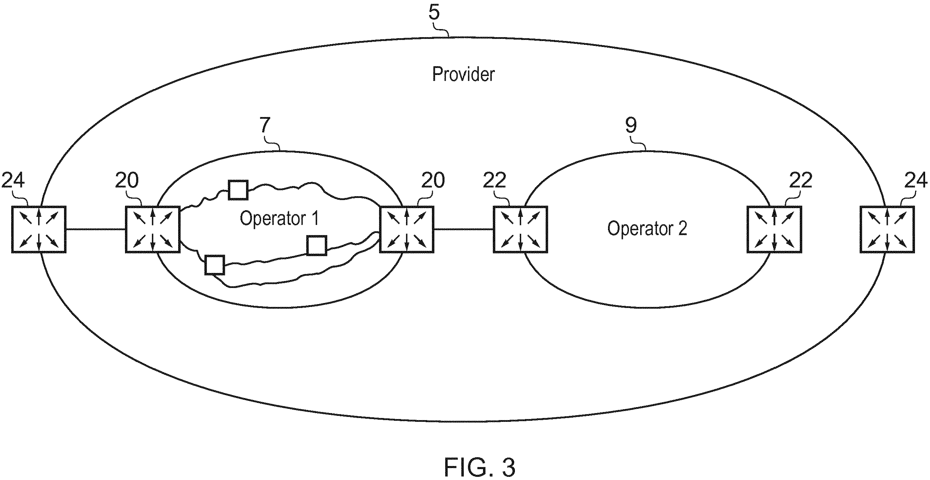

Figure 3 show schematically one way in which a network may be divided when monitoring for performance of the network. In this case the network is an Ethernet network that is divided into multiple domains and performance is measured by performing an Ethernet connectivity fault management test per domain. Thus for CFM (Connectivity Fault Management), the network is partitioned into hierarchal administrative domains called Maintenance Domains and each one is assigned a level ranging from 0 to 7. The larger the domain the higher value, thus, in this example the operator domain would be assigned the lowest value of 0 with a provider domain having a larger value. Domains cannot intersect however they can be touching and/or nested. The CFM exchanges messages and performs operation on a per domain basis and thus, the switches 20 and 22 at the edge of the domains act as initiating and/or receiving nodes for monitoring the quality of communications within that particular domain.

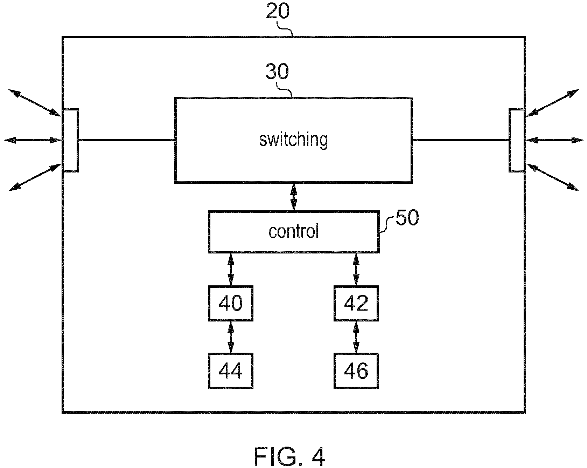

Figure 4 schematically shows one of the switching devices or nodes 20. This switching device 20 has input/outputs for receiving and outputting communications. It also has switching circuitry 30 for routing the received messages to particular output paths and control circuitry 50 for controlling the routing. In this embodiment, there are two sets of counters 40, 44 and 42, 46 for counting inprofile data packets that are received and are counted according to a particular monitoring mode.

Where node 20 is the initiating node then control circuitry 50 will transmit a monitoring request in the form of a LMM loss measurement message towards a receiving node and will define the monitoring mode by setting a field within this message, it will also transmit a value of a counter 40 that is counting a number of data packets of the type indicated by the monitoring mode that have been transmitted to the receiving node. This LMM is transmitted once per time interval, the counter 40 counting the number of data packets transmitted and counter 44 recording the number of data packets of the type indicated by the monitoring mode received from the receiving node. The initiating node will also determine the number of data packets that the receiving node receives from the transmitting node this number being indicated in response messages LMR transmitted from the receiving node in response to the LMM. In some embodiments where the link in both directions is being monitored the LMR will also comprise a number indicating the number of data packets that the receiving node has transmitted to the initiating node. Thus the loss of data packets during communication between the two nodes can be determined by comparing the actual counter values with the values of the counters provided in the LMM and LMR.

In some cases control circuitry may control two monitoring modes at a same time such that further LMMs are transmitted indicating a further mode and in this case the two sets of counters 42 and 46 will count data packets indicated by this different mode that are transmitted and received between the time intervals of these messages.

Where node 20 is a receiving node and receives LMMs from another node, then control circuitry 50 will configure a set of the counters to count particular data packets in dependence upon the field identifying the mode of monitoring within the LMM received. It will then transmit a LMR response to the LMM indicating the number of these packets that it has received and the number of data packets of this sort that it has transmitted to the initiating node.

In summary embodiments provide a system where the operator does not need to configure the nodes on both the ends.

For LM :

Operator has the flexibility to chose the mode(per-vlan-mode or per-vlan-per-pbit-mode) of the test between the nodes without configuring them manually.

Operator intervention is not required to ensure the correct mode and the possibilty of mode misconfiguration in the nodes can be avoided or at least reduced.

Advantages of this approach w.r.t LM:

- No need to run 8 different tests to determine per-vlan loss, which in turn reduces the overhead in the network.
- No additional overhead in the Management station to collate the loss across different test to compute the per-vlan loss.
- Enables the operator to run per-vlan and per-vlan-per-bit mode at the same time.
- No additional overhead to the operator to keep both LM orginator/responder in the same mode.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

**1.** A method of indicating one of a plurality of monitoring modes for monitoring communication between nodes in a network, said method comprising:

transmitting an indicator identifying one of said plurality of monitoring modes from an initiating node towards a receiving node; and

transmitting a monitoring request from said initiating node towards said receiving node, said monitoring request triggering monitoring of communication between said initiating node and said receiving node.

2. A method according to claim 1, wherein said step of transmitting said indicator and transmitting said monitoring request comprises a single step, said indicator being transmitted in a predetermined field within said monitoring request.

3. A method according to claim 1, wherein said step of transmitting said indicator comprises transmitting said indicator as a control signal prior to transmitting said monitoring request.

4. A method according to claim 2, further comprising transmitting a further monitoring request towards said receiving node, said further monitoring request comprising a further indicator indicating a further one of said plurality of monitoring modes.

5. A method according to any preceding claim, comprising receiving a response to said monitoring request from said receiving node, said response providing an indication of a number of data packets relevant to said indicated monitoring mode received from said initiating node.

6. A method according to claim 5, wherein said monitoring request comprises a request to determine a number of data packets that are not successfully received during communication between said initiating node and said receiving node, said monitoring mode indicating said data packets to be monitored, such that monitoring according to said monitoring mode comprises counting said data packets indicated by said monitoring mode that are transmitted towards said receiving node and determining from a response received from said receiving node a number of said data packets that are received at said receiving node.

7. A method according to any preceding claim, wherein a plurality of different types of data packets are transmitted between said nodes, one of said plurality of monitoring modes corresponds to monitoring one type of data packet and a further one of said monitoring modes corresponds to monitoring multiple types of data packets transmitted between said nodes.

8. A method according to any preceding claim, wherein at least one of said monitoring modes comprises monitoring data packet loss transmitted in one direction between said initiating node and said receiving node, and a further one of said monitoring modes comprises monitoring data packet loss transmitted in both directions between said receiving node and said initiating node.

9. A node within a network, said node being operable to communicate with at least one further node via said network, said node comprising:

control logic operable to initiate monitoring of communication between said node and a receiving node by generating and transmitting a monitoring request towards said receiving node;

said control logic being further operable to generate an indicator identifying one of a plurality of monitoring modes for said monitoring of said communication and to transmit said indicator towards said receiving node.

10. A node according to claim 9, said node further comprising at least one counter, said at least one counter being operable following initiating of said monitoring to count data packets indicated by said monitoring mode transmitted towards said receiving node.

11. A node according to claim 10, said node comprising a further counter, said at least one further counter being operable to count data packets indicated by a further mode of monitoring following initiating of said further monitoring by said control logic.

12. A method of determining one of a plurality of monitoring modes to perform when monitoring communication between two nodes in a network, said method comprising:

receiving at a receiving node a request for monitoring communication between said receiving node and an initiating node transmitting said request;

receiving at said receiving node an indicator indicating a mode of said monitoring;

transmitting a response to said request, said response being dependent upon said mode indicator.

13. A method according to claim 12, wherein said response comprises an indication of a number of data packets indicated by said mode of monitoring that have been received at said receiving node from said initiating node.

14. A node within a network, said node being operable to communicate with at least one further node via said network, said node comprising:

receiving logic operable to receive from an initiating node a request for monitoring communication between said node and said initiating node, and an indicator indicating a mode of said monitoring; and

determining logic operable to determine a mode of monitoring to perform in dependence upon said mode indicator.

15. A computer program which when executed by a computer is operable to control said computer to perform a method according to any one of claims 1 to 8 and 12 to 13.

Data packet counts

TxFCf [p-bit=0] = 0      RxFCl [p-bit=0] = 0
TxFCf [p-bit=1] = 10000 RxFCl [p-bit=1] = 10000
TxFCf [p-bit=2] = 20000 RxFCl [p-bit=2] = 20000
TxFCf [p-bit=3] = 30000 RxFCl [p-bit=3] = 30000
TxFCf [p-bit=4] = 40000 RxFCl [p-bit=4] = 40000
TxFCf [p-bit=5] = 50000 RxFCl [p-bit=5] = 50000
TxFCf [p-bit=6] = 60000 RxFCl [p-bit=6] = 60000
TxFCf [p-bit=7] = 70000 RxFCl [p-bit=7] = 70000

TxFCf [total]    = 280000   RxFCl [total] = 280000

Data packet counts

TxFCf [p-bit=0] = 0      RxFCl [p-bit=0] = 0
TxFCf [p-bit=1] = 100    RxFCl [p-bit=1] = 100
TxFCf [p-bit=2] = 200    RxFCl [p-bit=2] = 200
TxFCf [p-bit=3] = 300    RxFCl [p-bit=3] = 300
TxFCf [p-bit=4] = 400    RxFCl [p-bit=4] = 400
TxFCf [p-bit=5] = 500    RxFCl [p-bit=5] = 500
TxFCf [p-bit=6] = 600    RxFCl [p-bit=6] = 600
TxFCf [p-bit=7] = 700    RxFCl [p-bit=7] = 700

TxFCf [total]    = 2800   RxFCl [total]    = 2800

MEP mode:
per-vlan-mode

MEP mode:
per-vlan-mode

Test initiated
with pbit:2

LMM Packet: p-bit=2, TxFCf :280000, TxFCb=0, RxFCf=0

pbit received in the LMM
packet is ignored and the aggregate
packet count is copied in to LMR
packet as mode is configured
as per-vlan-mode

Aggregate pkt count is copied
in to LMM packet as the mode is
configured as per-vlan-mode.

LMM Packet: p-bit=2, TxFCf :280000, TxFCb=2800, RxFCf=2800

Data packets

TxFCf [tp] = 280000
TxFCb [tp] = 2800
RxFCf [tp] = 2800
RxFCl [tp] = 280000

FIG. 1

EP 3 068 074 A1

Data packet counts

TxFCf [p-bit=0] = 0       RxFCl [p-bit=0] = 0
TxFCf [p-bit=1] = 10000 RxFCl [p-bit=1] = 10000
TxFCf [p-bit=2] = 20000 RxFCl [p-bit=2] = 20000
TxFCf [p-bit=3] = 30000 RxFCl [p-bit=3] = 30000
TxFCf [p-bit=4] = 40000 RxFCl [p-bit=4] = 40000
TxFCf [p-bit=5] = 50000 RxFCl [p-bit=5] = 50000
TxFCf [p-bit=6] = 60000 RxFCl [p-bit=6] = 60000
TxFCf [p-bit=7] = 70100 RxFCl [p-bit=7] = 70100

TxFCf [total]   = 280100  RxFCl [total] = 280100

Data packet counts

TxFCf [p-bit=0] = 0       RxFCl [p-bit=0] = 0
TxFCf [p-bit=1] = 100    RxFCl [p-bit=1] = 100
TxFCf [p-bit=2] = 200    RxFCl [p-bit=2] = 200
TxFCf [p-bit=3] = 300    RxFCl [p-bit=3] = 300
TxFCf [p-bit=4] = 400    RxFCl [p-bit=4] = 400
TxFCf [p-bit=5] = 500    RxFCl [p-bit=5] = 500
TxFCf [p-bit=6] = 600    RxFCl [p-bit=6] = 600
TxFCf [p-bit=7] = 800    RxFCl [p-bit=7] = 800

TxFCf [total]   = 2900   RxFCl [total]   = 2900

LMM Packet: p-bit=2, TxFCf :280100,
TxFCb=0, RxFCf=0

LMR Packet: p-bit=2, TxFCf :280100,
TxFCb=2900, RxFCf=2900

TxFCf [tc] = 280100
TxFCb [tc] = 2900
RxFCf [tc] = 2900
RxFCl [tc] = 280100

Loss Measurement:
Frame Loss far-end  = [TxFCf[tc]-TxFCf[tp]]-
                      |[RxFCf[tc]-RxFCf[tp]]
                    = | 280100-280000 |-
                      | 2900-2800 |
                    = 0
Frame Loss near-end = [TxFCb[tc]-TxFCb[tp]]-
                      |[RxFCl[tc]-RxFCl[tp]]
                    = | 2900-2800 |-
                      | 280100-280000 |
                    = 0

FIG. 1 (Continued)

EP 3 068 074 A1

LM Initiator

LM Responder

**Data packet counts**

TxFCf [p-bit=0] = 0    RxFCl [p-bit=0] = 0
TxFCf [p-bit=1] = 10000 RxFCl [p-bit=1] = 10000
TxFCf [p-bit=2] = 20000 RxFCl [p-bit=2] = 20000
TxFCf [p-bit=3] = 30000 RxFCl [p-bit=3] = 30000
TxFCf [p-bit=4] = 40000 RxFCl [p-bit=4] = 40000
TxFCf [p-bit=5] = 50000 RxFCl [p-bit=5] = 50000
TxFCf [p-bit=6] = 60000 RxFCl [p-bit=6] = 60000
TxFCf [p-bit=7] = 70000 RxFCl [p-bit=7] = 70000

TxFCf [total]   = 280000  RxFCl [total] = 280000

**Data packet counts**

TxFCf [p-bit=0] = 0    RxFCl [p-bit=0] = 0
TxFCf [p-bit=1] = 100    RxFCl [p-bit=1] = 100
TxFCf [p-bit=2] = 200    RxFCl [p-bit=2] = 200
TxFCf [p-bit=3] = 300    RxFCl [p-bit=3] = 300
TxFCf [p-bit=4] = 400    RxFCl [p-bit=4] = 400
TxFCf [p-bit=5] = 500    RxFCl [p-bit=5] = 500
TxFCf [p-bit=6] = 600    RxFCl [p-bit=6] = 600
TxFCf [p-bit=7] = 700    RxFCl [p-bit=7] = 700

TxFCf [total]   = 2800  RxFCl [total]   = 2800

Test initiated with pbit:2
and Mode: per-vlan-mode

LMM Packet: p-bit=2, M-bit=1, TxFCf :280000,
TxFCb=0, RxFCf=0

Aggregate pkt count is copied
in to LMM packet as the test mode is
configured as per-vlan-mode

pbit received in the LMM
packet is ignored and the aggregate
packet count is copied in to LMR
packet as M-bit in LMM packet is
set to per-vlan-mode

LMM Packet: p-bit=2, M-bit=1, TxFCf :280000,
TxFCb=2800, RxFCf=2800

Data packets

TxFCf [tp] = 280000
TxFCb [tp] = 2800
RxFCf [tp] = 2800
RxFCl [tp] = 280000

FIG. 2

EP 3 068 074 A1

Data packet counts

TxFCf [p-bit=0] = 0        RxFCl [p-bit=0] = 0
TxFCf [p-bit=1] = 10000 RxFCl [p-bit=1] = 10000
TxFCf [p-bit=2] = 20000 RxFCl [p-bit=2] = 20000
TxFCf [p-bit=3] = 30000 RxFCl [p-bit=3] = 30000
TxFCf [p-bit=4] = 40000 RxFCl [p-bit=4] = 40000
TxFCf [p-bit=5] = 50000 RxFCl [p-bit=5] = 50000
TxFCf [p-bit=6] = 60000 RxFCl [p-bit=6] = 60000
TxFCf [p-bit=7] = 70100 RxFCl [p-bit=7] = 70100

TxFCf [total]    = 280100  RxFCl [total] = 280100

Data packet counts

TxFCf [p-bit=0] = 0        RxFCl [p-bit=0] = 0
TxFCf [p-bit=1] = 100      RxFCl [p-bit=1] = 100
TxFCf [p-bit=2] = 200      RxFCl [p-bit=2] = 200
TxFCf [p-bit=3] = 300      RxFCl [p-bit=3] = 300
TxFCf [p-bit=4] = 400      RxFCl [p-bit=4] = 400
TxFCf [p-bit=5] = 500      RxFCl [p-bit=5] = 500
TxFCf [p-bit=6] = 600      RxFCl [p-bit=6] = 600
TxFCf [p-bit=7] = 800      RxFCl [p-bit=7] = 800

TxFCf [total]    = 2900    RxFCl [total]    = 2900

LMM Packet: p-bit=2, M-bit=1, TxFCf :280100, TxFCb=0, RxFCf=0

LMR Packet: p-bit=2, M-bit=1, TxFCf :280100, TxFCb=2900, RxFCf=2900

TxFCf [tc] = 280100
TxFCb [tc] = 2900
RxFCf [tc] = 2900
RxFCl [tc] = 280100

Loss Measurement:
Frame Loss far-end = [TxFCf[tc]-TxFCf[tp]]-
                     |[RxFCf[tc]-RxFCf[tp]]
                   = | 280100-280000 |-
                     | 2900-2800 |
Frame Loss near-end = 0
                   = [TxFCb[tc]-TxFCb[tp]]-
                     |[RxFCl[tc]-RxFCl[tp]]
                   = | 2900-2800 |-
                     | 280100-280000 |
                   = 0

Data packets

FIG. 2 (Continued)

Data packet counts

TxFCf [p-bit=0] = 0      RxFCl [p-bit=0] = 0
TxFCf [p-bit=1] = 10000 RxFCl [p-bit=1] = 10000
TxFCf [p-bit=2] = 20000 RxFCl [p-bit=2] = 20000
TxFCf [p-bit=3] = 30000 RxFCl [p-bit=3] = 30000
TxFCf [p-bit=4] = 40000 RxFCl [p-bit=4] = 40000
TxFCf [p-bit=5] = 50000 RxFCl [p-bit=5] = 50000
TxFCf [p-bit=6] = 60000 RxFCl [p-bit=6] = 60000
TxFCf [p-bit=7] = 70200 RxFCl [p-bit=7] = 70200

TxFCf [total]  = 280200  RxFCl [total] = 280200

Data packet counts

TxFCf [p-bit=0] = 0      RxFCl [p-bit=0] = 0
TxFCf [p-bit=1] = 100    RxFCl [p-bit=1] = 100
TxFCf [p-bit=2] = 200    RxFCl [p-bit=2] = 200
TxFCf [p-bit=3] = 300    RxFCl [p-bit=3] = 300
TxFCf [p-bit=4] = 400    RxFCl [p-bit=4] = 400
TxFCf [p-bit=5] = 500    RxFCl [p-bit=5] = 500
TxFCf [p-bit=6] = 600    RxFCl [p-bit=6] = 600
TxFCf [p-bit=7] = 900    RxFCl [p-bit=7] = 900

TxFCf [total]   = 3000   RxFCl [total]   = 3000

Test initiated with pbit:7
with mode-per-vlan-per-pbit-mode

LMM Packet: p-bit=7, M-bit=0, TxFCf :70200,
TxFCb=0, RxFCf=0

Counters of p-bit 7 is copied
in to LMM packet as the test
mode is configured as
per-vlan-per-pbit-mode.

Counters of p-bit 7 is copied
in to LMR packet as M-bit in
LMM packet is set to
per-vlan-per-pbit-mode.

LMR Packet: p-bit=2, M-bit=0, TxFCf :900,
TxFCb=900, RxFCf=900

Data packets

TxFCf [tp] = 70200
TxFCb [tp] = 900
RxFCf [tp] = 900
RxFCl [tp] = 70200

FIG. 2 (Continued)

EP 3 068 074 A1

**Data packet counts**

| | |
|---|---|
| TxFCf [p-bit=0] = 0 | RxFCl [p-bit=0] = 0 |
| TxFCf [p-bit=1] = 10000 | RxFCl [p-bit=1] = 10000 |
| TxFCf [p-bit=2] = 20000 | RxFCl [p-bit=2] = 20000 |
| TxFCf [p-bit=3] = 30000 | RxFCl [p-bit=3] = 30000 |
| TxFCf [p-bit=4] = 40000 | RxFCl [p-bit=4] = 40000 |
| TxFCf [p-bit=5] = 50000 | RxFCl [p-bit=5] = 50000 |
| TxFCf [p-bit=6] = 60000 | RxFCl [p-bit=6] = 60000 |
| TxFCf [p-bit=7] = 70300 | RxFCl [p-bit=7] = 70300 |
| | |
| TxFCf [total] = 280300 | RxFCl [total] = 280300 |

**Data packet counts**

| | |
|---|---|
| TxFCf [p-bit=0] = 0 | RxFCl [p-bit=0] = 0 |
| TxFCf [p-bit=1] = 100 | RxFCl [p-bit=1] = 100 |
| TxFCf [p-bit=2] = 200 | RxFCl [p-bit=2] = 200 |
| TxFCf [p-bit=3] = 300 | RxFCl [p-bit=3] = 300 |
| TxFCf [p-bit=4] = 400 | RxFCl [p-bit=4] = 400 |
| TxFCf [p-bit=5] = 500 | RxFCl [p-bit=5] = 500 |
| TxFCf [p-bit=6] = 600 | RxFCl [p-bit=6] = 600 |
| TxFCf [p-bit=7] = 1000 | RxFCl [p-bit=7] = 1000 |
| | |
| TxFCf [total] = 3100 | RxFCl [total] = 3100 |

LMM Packet: p-bit=7, M-bit=0, TxFCf :70300, TxFCb=0, RxFCf=0

LMR Packet: p-bit=2, M-bit=0, TxFCf :1000, TxFCb=1000, RxFCf=1000

TxFCf [tc] = 70300
TxFCb [tc] = 1000
RxFCf [tc] = 1000
RxFCl [tc] = 70300

Loss Measurement:
Frame Loss far-end = [TxFCf[tc]-TxFCf[tp]]-
|[RxFCf[tc]-RxFCf[tp]]
= | 70300-70200 |-
| 1000-900 |
Frame Loss near-end = 0
= [TxFCb[tc]-TxFCb[tp]]-
|[RxFCl[tc]-RxFCl[tp]]
= | 1000-900 |-
| 70300-70200 |
= 0

**FIG. 2** (Continued)

EP 3 068 074 A1

FIG. 3

FIG. 4

**Europäisches Patentamt**
**European Patent Office**
**Office européen des brevets**

# EUROPEAN SEARCH REPORT

**Application Number**

EP 15 30 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FROST S BRYANT CISCO SYSTEMS D: "Packet Loss and Delay Measurement for MPLS Networks; rfc6374.txt", PACKET LOSS AND DELAY MEASUREMENT FOR MPLS NETWORKS; RFC6374.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 September 2011 (2011-09-18), pages 1-52, XP015081292, [retrieved on 2011-09-18] * page 2, line 1 - page 45, line 19 * | 1-15 | INV. H04L12/24 |
| X | US 2013/329565 A1 (HOLNESS MARC [CA] ET AL) 12 December 2013 (2013-12-12) * paragraph [0016] - paragraph [0040] * | 1,2,4-6, 8-15 | |
| X | US 2012/016981 A1 (CLEMM ALEXANDER [US] ET AL) 19 January 2012 (2012-01-19) * paragraph [0025] - paragraph [0093]; figures 2-3 * | 1-4,9, 12,14,15 | |
| X | WO 2011/045679 A1 (ERICSSON TELEFON AB L M [SE]; KERN ANDRAS [HU]; TAKACS ATTILA [HU]) 21 April 2011 (2011-04-21) * page 6, line 16 - page 25, line 6 * | 1,2,4,9, 12,14,15 | TECHNICAL FIELDS SEARCHED (IPC) H04L |
| A,D | "OAM functions and mechanisms for Ethernet based networks; G.8013/Y.1731 (07/11)", ITU-T STANDARD, INTERNATIONAL TELECOMMUNICATION UNION, GENEVA ; CH, no. G.8013/Y.1731 (07/11), 22 July 2011 (2011-07-22), pages 1-92, XP017578457, [retrieved on 2012-03-02] * Chapter 8, "OAM functions for performance monitoring" * * Appendix II Frame Loss Measurement * | 1-15 | |

The present search report has been drawn up for all claims

| Place of search | Date of completion of the search | Examiner |
|---|---|---|
| Munich | 14 August 2015 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5376

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2015

| Patent document cited in search report | | Publication date | Patent family member(s) | | Publication date |
|---|---|---|---|---|---|
| US 2013329565 | A1 | 12-12-2013 | NONE | | |
| US 2012016981 | A1 | 19-01-2012 | CN | 103003802 A | 27-03-2013 |
| | | | EP | 2593870 A1 | 22-05-2013 |
| | | | US | 2012016981 A1 | 19-01-2012 |
| | | | US | 2015006721 A1 | 01-01-2015 |
| | | | WO | 2012008977 A1 | 19-01-2012 |
| WO 2011045679 | A1 | 21-04-2011 | CN | 102598588 A | 18-07-2012 |
| | | | EP | 2489157 A1 | 22-08-2012 |
| | | | US | 2012271928 A1 | 25-10-2012 |
| | | | WO | 2011045679 A1 | 21-04-2011 |

EPO FORM P0459

For more details about this annex : see Official Journal of the European Patent Office, No. 12/82